Europäisches Patentamt

European Patent Office

Office européen des brevets

(19)

(11) **EP 0 614 547 B1**

(12) **EUROPÄISCHE PATENTSCHRIFT**

(45) Veröffentlichungstag und Bekanntmachung des Hinweises auf die Patenterteilung:
**02.04.1997  Patentblatt 1997/14**

(51) Int Cl.[6]: **G05B 13/02**

(86) Internationale Anmeldenummer:
**PCT/DE92/00804**

(21) Anmeldenummer: **92919294.6**

(22) Anmeldetag: **18.09.1992**

(87) Internationale Veröffentlichungsnummer:
**WO 93/11473 (10.06.1993 Gazette 1993/14)**

(54) **VERFAHREN ZUR REGELUNG FÜR DYNAMISCHE SYSTEME N-TER ORDNUNG**

PROCESS FOR REGULATING NTH-ORDER DYNAMIC SYSTEMS

PROCEDE DE REGULATION DE SYSTEMES DYNAMIQUES DU ENIEME ORDRE

(84) Benannte Vertragsstaaten:
**DE FR GB IT**

(30) Priorität: **25.11.1991  DE 4138662**

(43) Veröffentlichungstag der Anmeldung:
**14.09.1994  Patentblatt 1994/37**

(73) Patentinhaber: **SIEMENS AKTIENGESELLSCHAFT**
**80333 München (DE)**

(72) Erfinder: **PALM, Rainer**
**D-80331 München (DE)**

(56) Entgegenhaltungen:
- **IEEE INTERNATIONAL CONFERENCE ON SYSTEMS ENGINEERING August 1989, FAIRBORN US Seiten 419 - 422 KNAFEL ET AL. 'FUZZY LOGIC CONTROL FOR VARIABLE STRUCTURE SYSTEMS'**
- **ELECTRONICS Bd. 36, Nr. 3, August 1989, NEW YORK US Seiten 321 - 329 JIAN-XIN XU ET AL 'IMPLEMENTATION OF VSS CONTROL TO ROBOTIC MANIPULATORS-SMOOTHING MODIFICATION'**
- **PATENT ABSTRACTS OF JAPAN vol. 15, no. 335 (P-1242)26. August 1991 & JP,A, 31 23 902**

EP 0 614 547 B1

## EP 0 614 547 B1

**Beschreibung**

Bekannte Regelsysteme für dynamische Systeme in der Technik sind entweder rein konventionell auf der Grundlage linearer oder nicht-linearer Systemmodelle aufgebaut oder bestehen aus reinen Fuzzy-Control-Reglern. Jeder der beiden grundverschiedenen Ansätze hat dabei seine eigenen typischen Vorteile und Nachteile. Unter den konventionellen Regelsystemen sind die sog. Sliding-Mode-Controller mit Boundary Layer besonders ausgezeichnet, da diese den Forderungen nach Robustheit und Einbeziehung eines Minimums an Systemkenntnis am ehesten gerecht werden (J. F. Slotine: The Robust Control of Robot Manipulation; The Intern. Journ. of Robotics Research (MIT), Vol.4, No.2, 1985, pp.49-64). Diese Regler sind konventionelle Regler für Systeme höherer Ordnung (n >= 2), die einen Kompensationsanteil für Systemnichtlinearitäten und eine Grenzschicht (Boundary Layer) um die Gleitebene (Sliding Surface (SS)) herum besitzen, um einen kontinuierlichen Vorzeichenwechsel der Stellgröße zu erreichen. Voraussetzung für einen Reglerentwurf dieser Art ist die Kenntnis der oberen Grenzen der auftretenden Modellunsicherheiten, Parameterfluktuationen, Störungen und Frequenzen. Ein Nachteil dieser Regler ist, daß für den Entwurf des Kompensationsanteils eine tiefere Kenntnis der nicht-linearen Systemanteile Voraussetzung ist, was die Variabilität eines einmal eingestellten Reglers dieser Art stark einschränkt.

Eine Alternative zu konventionellen Regelprinzipien bilden die Fuzzy Controller, die häufig auf der Grundlage einer zweidimensionalen Phasenebene entworfen werden (Mamdani. E.H. u. Assilian S.; An Experiment in Linguistic Synthesis with a Fuzzy Logic Controller; In: E.H. Mamdani & B.R. Gaines, Fuzzy Reasoning and its Applications, London, Academic Press, 1981, pp. 311-323). Diese arbeiten im Prinzip wie Sliding-Mode-Controller mit Boundary Layer (S. Kawaji, N. Matsunaga: Fuzzy Control of VSS Type and its Robustness; IFSA 91, Brussels, July 7-12 1991, preprints vol. "engineering" pp. 81-88) und benötigen ebenso wie diese zu ihrem Entwurf Informationen über obere Grenzen der Modellunsicherheiten Parameterfluktuationen, Störungen und Frequenzen. Eine Kompensation linearer oder nicht-linearer Anteile erfolgt nicht; Die Regelung erfolgt ausschließlich über Fuzzy-Regeln, die aus der Phasenebene auf heuristische Weise abgeleitet werden. Ein Nachteil dieser Regler ist ihre Beschränkung auf reine Fuzzy-Regeln ohne leicht realisierbare Kompensationsanteile zu berücksichtigen bzw. ohne zusätzliche Filter wie z. B. eine Grenzschicht, einzubeziehen. Des weiteren beschränken sich die meisten Fuzzy Controller auf die Verarbeitung eines Fehlers und dessen zeitlicher Ableitung in Systemen zweiter Ordnung (K.L. Tang, R.J. Mulholland: Compparing Fuzzy Logic with Classical Controller Designs; IEEE Trans. on Syst., Man and Cybernetics, Vol. SMC-17, No. 6, Nov/Dec 1987, pp. 1085-1087). Eine Erhöhung der Ordnung führt bei solchen Fuzzy Controllern zu einer mit der Systemordnung exponentiell wachsenden Erhöhung der Regelanzahl. Ein weiterer Nachteil dieser Regler ist, daß an den Rändern der normierten Phasenebene wie beim Sliding-Mode-Controller ohne Grenzschicht ein diskontinuierlicher Vorzeichenwechsel (chattering) der Stellgröße stattfinden kann, was zu einer unerwünschten Belastung der Stellantriebe führt. Außerdem tendieren Fuzzy Controller, deren Zugehörigkeitsfunktionen in der Nähe der Gleitebene nicht fein genug abgestimmt sind, zu unerwünschten Grenzzyklen.

Der Erfindung liegt die Aufgabe zugrunde, einen Regler für dynamische Systeme n-ter Ordnung anzugeben, der die Vorteile des Sliding-Mode-Controllers mit Grenzschicht mit denen des Fuzzy Controllers verbindet, also einen robusten Regler für eine breite Klasse von nicht-linearen Systemen n-ter Ordnung anzugeben, der auf der Basis von Fuzzy-Regeln einerseits und von konventioneller, scharfer (crisp) Regelung andererseits die Vorteile beider Techniken verbindet.

Diese Aufgabe wird durch ein Verfahren zur Regelung für dynamische Systeme n-ter Ordnung mit Merkmalen nach Anspruch 1 gelöst.

Bei diesem Regler ergibt sich eine Stellgröße als Summe aus einem linearen Kompensationsterm und einem Produktterm, wobei der Kompensationsterm eine Linearkombination eines Schleppfehlers und seiner zeitlichen Ableitungen ist, und wobei der Produktterm durch Multiplikation eines Fuzzy-Control-Terms mit einem Sättigungsterm gebildet wird.

Auf diese Weise wird der Fuzzy Controller mit einem Regelungsterm erweitert, der einen bestimmten, leicht zugänglichen linearen Systemanteil kompensiert. Des weiteren wird eine Grenzschicht eingeführt, die einen kontinuierlichen Vorzeichenwechsel der Stellgröße im gesamten Arbeitsbereich ermöglicht. Schließlich wird hierdurch die Methode der Fuzzy Control auf Systemordnungen > 2 erweitert. Der erfindungsgemäße Reglerentwurf lehnt sich an die Prinzipien des Reglerentwurf 5 für Sliding-Mode-Controller mit Grenzschicht an und garantiert damit die Stabilität des geregelten Systems sowie dessen Robustheit gegenüber unmodellierten Frequenzen.

Vorteilhafte Weiterbildungen der Erfindung ergeben sich aus den Unteransprüchen.

Figur 1 zeigt in schematischer Weise ein einfaches Beispiel für ein dynamisches System, welches durch einen erfindungsgemäßen Regler angemessen geregelt werden kann.

Figur 2 zeigt die Zugehörigkeitsfunktionen eines Demonstrationsbeispiels der erfindungsgemäßen Regelung des dynamischen Systems aus Figur 1.

Figur 3 zeigt die Verfolgung einer sinusförmigen, geneigten Kontur durch einen kraftsensorbestückten Robotereffektor.

Im folgenden wird die Erfindung anhand eines bevorzugten Ausführungsbeispiels näher beschrieben.

A. Reglerentwurf

Der Reglerentwurf geht von einem nichtlinearen System n-ter Ordnung aus:

$$(1) \qquad x^{(n)} = f(\underline{x},t) + u + d(t)$$

mit

$$\underline{x}(t) = (x, x^{(1)}, ..., x^{(n-1)})^T$$

$\underline{x}(t)$-Zustandsvektor; $d(t)$ -Störungen; $u$-Stellgröße. $f(\underline{x},t)$-nichtlineare Systemanteile.
Weiterhin sind die oberen Grenzen $F(\underline{x},t), D(\underline{x},t)$ und $v(t)$ mit

$$(2) \qquad \left| f(\underline{x},t) \right| <= \tilde{F}(\underline{x},t); \ |d| <= D(\underline{x},t); \ \left| x_d^{(n)}(t) \right| <= v(t)$$

mit

   $x_d$-Sollwert
bekannt. Der Schleppfehler (Tracking Error) sei

$$(3) \qquad e = \underline{x}(t) - \underline{x}_d(t) = (e, e^{(1)}, ..., e^{(n-1)})^T$$

Außerdem sei

$$(4) \qquad s(\underline{x},t) = (d/dt + \lambda)^{(n-1)} \ e = 0; \ \lambda >= 0$$

eine Gleitoberfläche (Sliding Surface (SS)). Gelingt es, die Stellgröße $u$ durch einen Regler so zu bestimmen, daß

$$(5) \qquad 1/2 \ d/dt(s^2(\underline{x},t)) <= - \eta \ |s|; \ \eta >= 0$$

so verhält sich das System so, daß der Fehlervektor unabhängig von unmodellierten Systemanteilen und Störungen in endlicher Zeit zu Null wird. Mit dieser Bedingung (5) wird der Zustandsvektor immer in Richtung der SS gezwungen. Befindet er sich auf der SS, so gleitet er in einer endlichen Zeit, die von dem gewählten $\lambda$ in G1.(4) und der maximalen Stellgröße $|u_{max}|$ abhängt, in den Nullpunkt der Phasenebene, die von den Komponenten des Fehlervektors $\underline{e}$ aufgespannt wird.
   Ein Regler, der das leistet, ist

$$(6) \quad u = - \sum_{k=1,...,n-1} \binom{n-1}{k} \lambda^k \ e^{(n-k)} \ - \ K_{Fuzz}(\underline{e},\lambda) \ sat(s/\Phi)$$

mit

$$sat(s/\Phi) = \begin{pmatrix} s/\Phi & \text{für } |s/\Phi| < 1 \\ sgn(s/\Phi) & \text{für } |s/\Phi| >= 1 \end{pmatrix}$$

$\Phi > 0$ -Stärke der BL
$K_{Fuzz}$ -eigentlicher FC.

Der Regler ist stabil für

$$(7) \qquad K_{Fuzzlmax} >= \tilde{F} + D + v + \eta$$

Um weiterhin unmodellierte Frequenzen $v_u$ zu unterdrücken, muß

$$(8) \qquad \frac{K(\underline{x},t)_{max}}{\Phi} <= \lambda << v_u$$

sein. Bei einem Abtastsystem mit einer Abtastfrequenz $v_{sample}$ und einer Zeitkonstanten $\pi_{plant}$ des zu regelnden Prozesses muß $\lambda$ außerdem so gewählt werden, daß

$$(9) \qquad \lambda < \frac{v_{sample}}{2\,(1 + \tau_{plant}\; v_{sample})}$$

Der eigentliche Fuzzy Control Term $K_{Fuzz}$ ist dadurch gekennzeichnet, daß im Bedingungsteil der Fuzzy-Regeln anstelle des Fehlers und seiner Ableitungen der Abstand $s_p$ des Zustandsvektors von der Sliding Surface SS (im 2-dim. Fall von der Schaltgeraden) und der Abstand d von der Richtung des Normalenvektors des Sliding Surface SS, die eine Schalthyperfläche ist, bewertet wird. Das entspricht der Transformation der n-dimensionalen Phasenebene in eine 2-dimensionale $s_p$-d-Ebene. Mit dieser Maßnahme vermeidet man das exponentielle Ansteigen von Regeln mit der Erhöhung der Systemordnung. Die einzelnen Regelungsschritte bestehen dann darin, daß

a) aus Sollwerten und Regelgrößen des Prozesses ein Fehlervektor $\underline{e}$ gebildet wird;
b) der Fehlervektor $\underline{e}$ auf einen normierten Fehlervektor $\underline{e}_N$ normiert wird, mit der Eigenschaft, daß $d_N$ innerhalb eines begrenzten Phasenraumgebietes liegt;
c) aus $\underline{e}_N$ eine normierte Gleitfläche (SS), die durch $s(\underline{x},t) = 0$ gegeben ist, gebildet wird, mittels derer das Vorzeichen der anzugebenden Stellgröße u bestimmt wird;
d) die Abstände $s_p$ zwischen $\underline{e}_N$ und s=0 sowie d zwischen $\underline{e}_N$ und dem Normalenvektor $\underline{n}_N$ von s=0 gebildet werden, und $s_p$ und d aufgrund vorgegebener Zugehörigkeitsfunktionen fuzzifiziert werden;
e) mit Hilfe von i Fuzzy-Regeln der Form

$$IF\; s_p = s_{pi}\; AND\; d=d_i\; THEN\; u_N=u_{Ni}$$

der Fuzzy-Vektor $\mu_{uN}$ der normierten Stellgröße $u_N$ gebildet wird;
f) durch Defuzzifizierung aus dem Fuzzy-Vektor $\mu_{uN}$ eine scharfe normierte Stellgröße $u_N$ gebildet wird;
g) mit Hilfe eines vorher bestimmten Denormierungsfaktors aus $u_N$ eine physikalische Stellgröße $\tilde{u} = - K_{Fuzz}(e, \lambda)$ gebildet wird;
h) ein Kompensationsanteil

$$u_{Komp}\; =\; -\; \sum_{k=1,\ldots,n-1} \binom{n-1}{k}\; \lambda^k\; e^{(n-k)}$$

gebildet wird, und die Stellgröße $u = u_{Komp} + \tilde{u}\cdot sat(s/\Phi)$ auf das System geschaltet wird.

Die Normierungsfaktoren werden wie folgt bestimmt:
Die Sliding Surface SS in der normierten Phasenebene lautet

$$(11) \qquad (d/dt + \lambda_N)^{(n-1)}\; e_N = 0$$

Weiterhin seien $N_e$, $N_{e1}$, ... die Normierungsfaktoren für e, $e^1$, ... mit

$$e_N = N_e \cdot e; \; e^{(1)}{}_N = e^{(1)} \cdot N_{e^{(1)}}$$

Daraus ergibt sich mit Einsetzen des normierten Zustandsvektors $\underline{e}_N$ in Gl.(4) und einem Koeffizientenvergleich

$$\frac{N_{e^{(n-2)}}}{N_{e^{(n-1)}}} = \ldots = \frac{N_e}{N_{e^{(1)}}} - \lambda/\lambda_N$$

$\lambda_N$ wird der Einfachheit halber gleich Eins gesetzt, so daß nach der Wahl von $\lambda$ nach den o. g. Kriterien nur noch die Wahl eines der $N_{e(k)}$ offen bleibt, um alle Normierungsaktoren bestimmen zu können. Dazu bietet sich $N_e$ an, der so bestimmt wird, daß der Arbeitspunkt des Reglers sicher in das normierte Intervall von $e_N$ plaziert wird. Eine Verbesserung des Regelungsverhaltens durch Veränderung von $N_e$ kann mittels entsprechender Lernverfahren erfolgen. Innerhalb der normierten $s_p$-d-Ebene wird das normierte $K_{FuzzN}$ durch Regeln der Art

$$\text{IF } s_{pN} = s_{pNi} \text{ AND } d_N = d_{Ni} \text{ THEN } K_{FuzzN} = F_{FuzzNli} \tag{12}$$

berechnet. Schließlich sollen noch die Entwurfsvorschriften für die Formulierung der Regeln in der normierten $s_{pN}$-$d_N$-Ebene bestimmt werden:

1. $K_{FuzzN}$ soll ansteigen mit steigendem $|s_{pN}|$ und fallen mit fallendem $|s_{pN}|$,

2. $K_{FuzzN}$ soll ansteigen mit steigendem $|d_N|$ und fallen mit fallendem $|d_N|$.

Die *Wahl des Denormierungsfaktors $N_D$* erfolgt so: Es sei $K_{FuzzNlmax}$ der maximal mögliche Output des normierten Fuzzy Controller. Weiterhin sei $K_{Fuzzlmax}$ aus der Abschätzung (7) bekannt. Dann ergibt sich der Denormierungsfaktor zu

$$\tag{13} N_u = \frac{K_{Fuzzlmax}}{K_{FuzzNlmax}}$$

B. Demonstrationsbeispiel

Mit Hilfe eines Roboters soll eine Kontur kraftadaptiv verfolgt werden. Anwendungsfälle hierzu gibt es beim robotergeführten Gußputzen, Bahnschweißen, Kleben usw. Die Aufgabe ist, eine a priori nicht vollständig bekannte Oberflächenkontur mit dem Robotereffektor (Werkzeug, Greifer) mit einer konstanten Kraft zu verfolgen. Die zwischen Effektor und Oberfläche wirkenden Kräfte werden mit einem Kraftsensor gemessen. Der Kraftfehler zwischen Soll- und Istwert wird auf den Fuzzy-Regler gegeben, dessen Output (Stellgröße) eine Positionskorrektur des Roboterarms ist. Es wird angenommen, daß die gesamte Dynamik sich im Effektor bzw. in der Oberfläche befindet. Eine weitere Vereinfachung ist die Beschränkung der Dynamikberechnung auf eine Koordinatenrichtung. Der Effektor ist ein Feder-Masse-Dämpfungssystem und die Oberfläche sei als Feder modelliert. Die entsprechende Dgl. lautet dann:

$$(B1) \qquad m \cdot y^{(2)} + c \cdot (y^{(1)} - y^{(1)}{}_0) - m \cdot g \cdot K1 \cdot (y - y_0 - D)$$
$$+ K2 \cdot (y - y_c + r + A) = 0$$

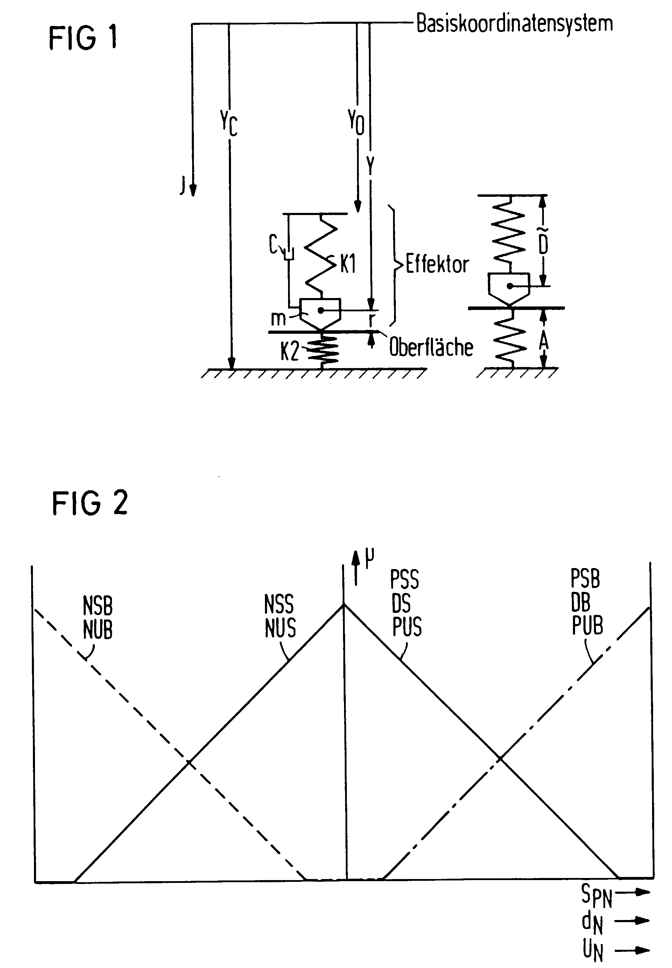

Gleichung (B1) ist eine Kraftbilanzgleichung folgender Art (siehe Fig. 1):

$$F_T + F_D - F_G + F_F + F_O = 0 \tag{B2}$$

mit

$F_T$-Trägheitskraft
$F_D$-Dämpfungskraft
$F_G$-Gewichtskraft
$F_F$-Federkraft
$F_O$-Oberflächenkraft.

Die Sensorkraft sei durch die Federkraft $F_F$ repräsentiert. Dann ergibt sich mit

$$(B3) \qquad F_F = K1 \cdot (y - y_0 - D) \, ;$$

$$F^{(1)}{}_F = K1 \cdot (y^{(1)} - y^{(1)}{}_0) \, ; \; F^{(2)}{}_F = K1 \cdot (y^{(2)} - y^{(2)}{}_0)$$

eine Gleichung für die Feder-(Sensor-)kraft $F_F$:

$$(B4) \qquad F^{(2)}{}_F = - \frac{c}{m} \cdot F^{(1)}{}_F + K1 \cdot g - \frac{K1}{m} \cdot F_F - \frac{K1}{m} \cdot F_0 - K1 \cdot y^{(2)}{}_0$$

Hierbei ist

$$(B5) \qquad U = - K1 \cdot y^{(2)}{}_0$$

die Stellgröße, die durch den Regler erzeugt werden soll.
Die konkreten Parameter lauten:

$C = 50 \text{kg/s}$
$m = 0.05 \text{kg}$
$K1 = 5000 \text{kg/s}^2$
$\tau_{sample} = 0.01 \text{s}$

Der Vergleich von Gl.(B1) in Pkt.3 und Gl.(B4) ergibt

$$x(t) => F_F(t)$$

$$x^{(n)}(t) => F^{(2)}{}_F$$

$$f(\underline{x}, t) => - \frac{c}{m} \cdot F^{(1)}{}_F + K1 \cdot g - \frac{K1}{m} \cdot F_F - \frac{K}{m} \cdot F_0$$

Weiterhin ist

$$s = \lambda e + e^{(1)}$$

$$e = F_F - F_{Fd}$$

Der Regler, der Gl.(6) des vorigen Abschnitts entspricht, hat für den zweidimensionalen Fall die Form

$$(B6) \qquad u = - \lambda \cdot e^{(1)} - K_{Fuzz}(e, e^{(1)}, \lambda) \cdot sat(s/\Phi)$$

Das F~ in Gl.(7) des vorigen Abschnitts ist gleich

$$F^{\sim} = -\frac{c}{m} F^{(1)}{}_F + K1 \cdot g - \frac{K1}{m} \cdot F_F - \frac{K1}{m} \cdot F_0$$

Die Abstände $s_{pN}$ und $|d_N|$ des Zustandsvektors e von der SS bzw. von der zur SS normalen Geraden in der normierten Phasenebene sind

$$S_{pN} = (e_N + e^{(1)}{}_N) / \sqrt{2} \qquad\qquad (B7)$$

und

$$|d_N| = \left| (-e_N + e^{(1)}{}_N) \right| / \sqrt{2} \qquad\qquad (B8)$$

Für die normierten Werte $S_{pN}$ und $|d_N|$ sowie die normierte Steuerung $u_N$ werden die folgenden Fuzzy-Sets definiert:

PSS-positive $S_{pN}$ small
PSB-positive $s_{pN}$ big
NSS-negative $S_{pN}$ small
NSB-negative $s_{pN}$ big
DS-$d_N$ small
DB-$d_N$ big
PUS-positive $u_N$ small
PUB-positive $u_N$ big
NUS-negative $u_N$ small
NUB-negative $u_N$ big.

Fig. 2 zeigt die entsprechenden Zugehörigkeitsfunktionen. Die Regeln zur Bildung der Steuerung $u_N$ lauten:

$s_{pN} > 0$
    IF PSS AND DS THEN NUS
    IF ((PSS AND DB) OR PSB) THEN NUB
$S_{pN} <= 0$
    IF NSS AND DS THEN PUS
    IF ((NSS AND DB) OR NSB) THEN PUB.

Für den Regler wurden folgende Parameter gewählt:

$$Ne = 100 \, \frac{s^2}{kg \cdot m}$$

$$N_{e^{(1)}} = 6{,}5 \, \frac{s^3}{kg \cdot m}$$

$$N_u = 50 \, \frac{kg \cdot m}{s^4}$$

$$\Phi = 2{;}5 \ m/s$$

$$Fd = 10N$$

v = 0.2 m/s *(Vortriebsgeschwindigkeit).*

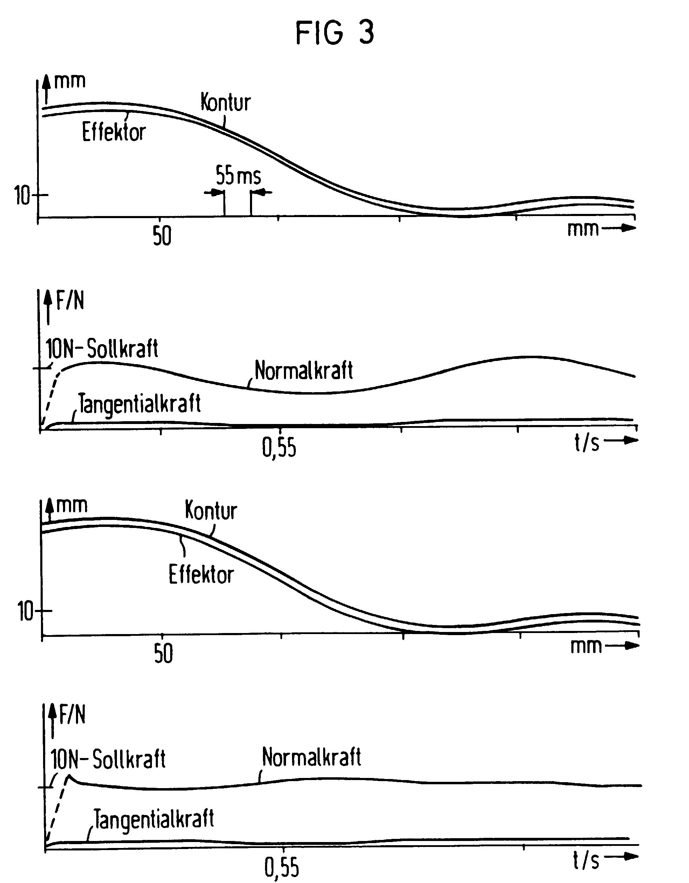

Fig. 3 zeigt die Verfolgung einer sinusförmigen, geneigten Kontur durch einen kraftsensorbestückten Robotereffektor, der durch das Feder-Masse-Dämpfungssystem nach Gl.(B1) modelliert wurde (siehe Fig. 3a für den PD-Regler und Fig. 3b für den Fuzzy Controller).

## Patentansprüche

1. Regler zur Regelung dynamischer Systeme n-ter Ordnung, bei dem sich eine Stellgröße u als Summe $u=C+P$ aus einem linearen Kompensationsterm C und einem Produktterm P ergibt, wobei

   a) der lineare Kompensationsterm C eine Linearkombination

$$C = -\sum_{k=1}^{n-1}\binom{n-1}{k}\lambda^{k}\overset{.}{e}^{(n-k)}$$

eines Schleppfehlers e und seiner zeitlichen Ableitungen $e^{(n-k)}$ ist, wobei $\lambda$ eine reziproke Zeitkonstante bezeichnet,
b) der Produktterm P durch Multiplikation $P=K_F\text{-}sat$ eines Fuzzy-Control-Terms KF mit einem Sättiqunqsterm sat gebildet wird,
c) der Sättigungsterm sat von den zeitlichen Ableitungen $s(x,t)=(d/dt+\lambda)^{(n-1)}e$ des Schleppfehlers und einer Grenzschichtkonstanten $\Phi>0$ gemäß der Beziehung

$$sat(s/\Phi)=\begin{pmatrix} s/\Phi \quad \text{für} \quad |s/\Phi|<1 \\ \text{sgn}(s/\Phi) \quad \text{für} \quad |s/\Phi|\geq 1 \end{pmatrix}$$

abhängt, und
d) der Fuzzy-Control-Term KF mit Hilfe von Fuzzy-Regeln der Form IF sp=spi AND d=di THEN uN=uNi bestimmt wird, in deren Bestimmungsteil der Abstand sp des Zustandsvektors x des zu regelnden Systems von einer Gleitfläche (SS) und der Abstand d von der Richtung des Normalenvektors der Gleitfläche (SS) bewertet wird, wobei die Gleitfläche (SS) durch die Beziehung

$$s(x,t)=(d/dt+\lambda)^{(n\text{-}1)}e=0 \; ; \; \lambda >0$$

gegeben ist.

## Claims

1. Controller for controlling dynamic nth-order systems, in which a manipulated variable u is produced as a sum $u = C + P$ of a linear compensation term C and a product term P,

   a) the linear compensation term C being a linear combination

$$C = -\sum_{k=1}^{n-1}\binom{n-1}{k}\lambda^{k}\overset{.}{e}^{(n-k)}$$

of a contouring error e and its time derivatives $e^{(n-k)}$, $\lambda$ denoting a reciprocal time constant,
b) the product term P being formed by multiplying $P = K_F \times sat$ of a fuzzy control term KF by a saturation term sat,
c) the saturation term sat being a function of the time derivatives $s(x,t)=(d/dt + \lambda)^{(n-1)}e$ of the contouring error and a boundary layer constant $\Phi>0$ in accordance with the relationship

$$sat(s/\Phi)=\begin{pmatrix} s/\Phi \quad \text{für} \quad |s/\Phi| <1 \\ \text{sgn}(s/\Phi) \quad \text{für} \quad |s/\Phi| \geq 1 \end{pmatrix}$$

and
d) the fuzzy control term KF being determined with the aid of fuzzy rules of the form IF sp=spi AND d=di THEN uN=uNi, in whose condition part the distance sp of the state vector x of the system to be controlled from a sliding surface (SS) and the distance D from the direction of the normal vector of the sliding surface (SS) are determined, the sliding surface (SS) being given by the relationship

$$s(x,t)=(d/dt + \lambda)^{(n-1)} e=0; \ \lambda>0.$$

## Revendications

1. Régulateur pour la régulation de systèmes dynamiques du n-ième ordre, selon lequel une grandeur réglante u résulte de la somme u = C + P d'un terme de compensation C linéaire et d'un terme de produit P,

   a) le terme de compensation C linéaire étant une combinaison linéaire

$$C = -\begin{pmatrix} n-1 \\ \Sigma \\ k=1 \end{pmatrix} \begin{matrix} n-1 \\ \\ k \end{matrix} \quad \lambda^k e^{(n-k)}$$

   d'une erreur de poursuite e et de ses dérivées e(n-k) par rapport au temps, $\lambda$ désignant une constante de temps inverse,
   b) le terme de produit P étant formé par la multiplication $P = K_F.sat$ d'un terme de contrôle flou KF par un terme de saturation sat,
   c) le terme de saturation sat dépendant des dérivées $s(x,t) = (d/dt+\lambda)(n-1)e$ de l'erreur de poursuite par rapport au temps et d'une constante de couche limite $\Phi>0$ selon la relation

$$sat(s/\Phi) = \begin{pmatrix} s/\Phi \quad \text{pour} \quad |s/\Phi| <1 \\ \text{sgn}(S/\Phi) \quad \text{pour} \quad |s/\Phi| \geq 1 \end{pmatrix}$$

   et
   d) le terme de contrôle flou KF étant déterminé à l'aide de règles floues de la forme IF sp=spi AND d=di THEN uN=uNi, dans la partie conditionnelle desquelles la distance sp du vecteur d'état x du système à réguler à une surface de glissement (SS) et la distance d à la direction du vecteur normal de la surface de glissement (SS) sont évaluées, la surface de glissement (SS) étant déterminée par la relation s(x,t) = (d/dt+$\lambda$)(n-1)e=0 ; $\lambda$>0.

FIG 1

FIG 2

# FIG 3